(19) **Europäisches Patentamt**
**European Patent Office**
**Office européen des brevets**

(11) **EP 4 007 317 B1**

(12) **EUROPEAN PATENT SPECIFICATION**

(45) Date of publication and mention
of the grant of the patent:
**27.09.2023 Bulletin 2023/39**

(21) Application number: **20210638.1**

(22) Date of filing: **30.11.2020**

(51) International Patent Classification (IPC):
**H04W 4/40** (2018.01)     **B60R 25/24** (2013.01)
**G07C 9/00** (2020.01)     **H04W 4/80** (2018.01)

(52) Cooperative Patent Classification (CPC):
**H04W 4/80; B60R 25/24; G07C 9/00309;**
**H04W 4/40;** G07C 2209/63

(54) **METHOD, VEHICLE AND PROGRAM CODE FOR ESTABLISHING A SHORT-RANGE WIRELESS CONNECTION**

METHODE, FAHRZEUG UND PROGRAMMCODE ZUR EINRICHTUNG EINER DRAHTLOSEN VERBINDUNG MIT KURZER REICHWEITE

PROCÉDÉ, VÉHICULE ET CODE DE PROGRAMME POUR ÉTABLIR UNE CONNEXION SANS FIL À COURTE PORTÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.06.2022 Bulletin 2022/22**

(73) Proprietors:
• **Bayerische Motoren Werke Aktiengesellschaft 80809 München (DE)**
• **Apple Inc. Cupertino CA 95014 (US)**

(72) Inventors:
• **Krebs, Alexander 80809 München (DE)**
• **Naguib, Ayman Cupertino, CA California 95014 (US)**

(74) Representative: **Wardle, Callum Tarn Withers & Rogers LLP 2 London Bridge London SE1 9RA (GB)**

(56) References cited:
**WO-A1-2019/067105     WO-A1-2020/069311 US-B2- 10 328 898**

**Description**

The present invention relates to methods, systems and devices for establishing a short-range wireless connection, for example between a mobile device and a vehicle. The disclosed methods, systems and devices may be used, for example, for establishing an ultra-wideband communication between a mobile phone and a vehicle for enabling contactless access to the vehicle.

Background of the invention

Contactless access systems for cars and similar vehicles are widely known. Conventional, physical keys nowadays often comprise an electronic transponder containing an electronic key, which can be queried remotely by a corresponding transceiver integrated into the vehicle control system. By coupling the transceiver with a central locking system and an electronic immobilizer, they can be used both for contactless access to the vehicle interior as well as starting the engine of the vehicle. Both the transponder as well as the transceiver integrated into the car often communicate using proprietary communication protocols and need to be statically paired by the vehicle manufacturer either directly or indirectly through authorized sale channels.

Some vehicle manufactures offer ultra-wideband (UWB) based, so called "keyless" access systems. These systems comprise an UWB remote controller and a corresponding UWB transceiver connected to the vehicle control system. Like the conventional transponder systems described above, the UWB based remote controllers and corresponding transceivers of the digital key system need to be statically paired by the vehicle manufacturer either directly or indirectly through an authorized sale channel.

BMW has developed the so called "BMW Connected Drive - Digital Key for 5", which is no longer based on a conventional, physical key, but uses digital keys stored securely on a smart phone to access a vehicle. As above, this digital key system can be used for vehicle unlocking and deactivation of an electronic mobilizer. The communication between the smart phone and the vehicle is based on near field communication (NFC), and uses a standardized protocol for communication between the vehicle and the smart phone. Unlike the "keyless" systems described above, the NFC based digital key system of BMW does not require a static pairing between the vehicle and the smart phone. However, due to limitations of the underlying technology, users need to physically touch their smartphones and/or authenticate themselves to unlock their vehicles.

WO 2019/067105 A1 relates to secure communication between a mobile device and a vehicle, by applying two wireless protocols, a first one to exchange parameters, including ranging parameters, for a secure interaction via a second protocol that involves ranging. E.g. BLE is used as first protocol and UWB as second protocol.

The present disclosure aims to further improve wireless access systems and/or to resolve or at least mitigate some of the disadvantages of previously known systems. Brief summary of the invention

According to one aspect of the present disclosure, a method for establishing a short-range wireless connection between a mobile device and a vehicle is provided according to claim 1. A vehicle is provided according to claim 13.

According to another aspect of the present disclosure, program code for execution by at least one processing component of a mobile device is provided according to claim 15.

Further embodiments of the invention are defined by the dependent claims.

Among others, the inventors have discovered that some communication protocols, such as the IEEE 802.15.4 standard for UWB communication, are insufficient to start a secure communication between two arbitrary, previously unpaired devices. To alleviate this problem, the disclosed methods and devices make use of another communication protocol that enables exchange of at least one configuration parameter between the mobile device and at least one controller of the vehicle. Based on the at least one configuration parameter, two arbitrary devices can be set-up to communicate with one another, for example to perform UWB based ranging procedures for enabling keyless access to the vehicle. UWB based ranging procedures are provably secure, and allow very precise ranging to the scale of centimetres.

Brief description of the attached drawings

Fig. 1 shows, in a schematic manner, a wireless vehicle access system according to an embodiment of the present disclosure.

Fig. 2 shows, in a schematic manner, a method for establishing a short-range wireless connection between a mobile device and a vehicle according to an embodiment of the present disclosure.

Fig. 3 shows, in a schematic manner, a process for initializing communication keys for use with a mobile device and a vehicle according to an embodiment of the present disclosure.

Figs. 4 to 6 show a two-, three- and four-message negotiation processes according to different embodiments of the present disclosure.
Fig. 7 shows an example of a UWB based ranging exchange in a MAC timing grid.

Detailed description of disclosed embodiments

In the following, various non-limiting embodiments of the present disclosure are described in more detail with respect to the attached drawings. In the drawings, the same reference signs may be used to identify similar or equivalent components of the disclosed embodiments. However, these components are not necessarily identical. If more than one instance of a single type of components is present, these may be distinguished by appropriate suffixes for better understanding. As far as the following specification does not include a particular suffix, reference is made to all instances of the corresponding component.

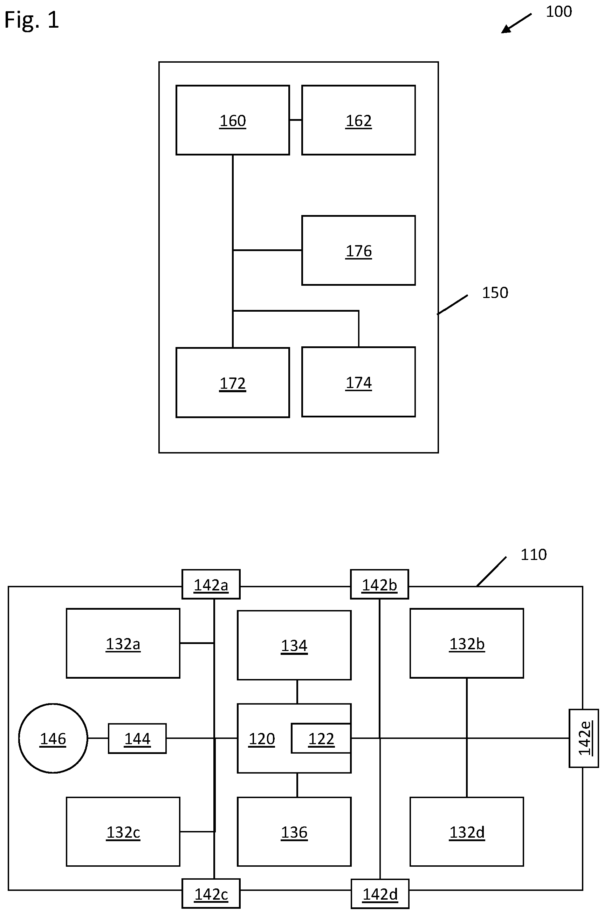

Fig. 1 shows, in a schematic manner, a wireless vehicle access system 100 according to an embodiment of the present disclosure. The vehicle access system 100 comprises a vehicle 110, for example a car, and a mobile access device 150, for example a smart phone.

The vehicle 110 comprises at least one controller, for example a central controller 120 of the vehicle, connected with various other vehicle components by means of a controller area network (CAN) bus system. The controller 120 comprises or is connected to at least one memory unit 122 for storing various data items, such as configuration parameters of various vehicle components, personalization data, error and service messages and other data associated with the vehicle 110.

Among the components connected to the controller 120 are transceivers 132, 134 and 136, which allow the controller 120 to wirelessly exchange information with other devices and networks. In the depicted embodiment, the vehicle 110 comprises four UWB transceivers 132a to 132d arranged in different locations throughout the vehicle 110, a Bluetooth Low Energy (BLE) transceiver 134 and a GSM-, LTE-, 5G- or similar transceiver 136 or unit for communication with a public telecommunication network.

The vehicle 110 further comprises various actors, which are also connected to the controller 120. Among these are four electrical door locks 142a to 142d for locking and unlocking corresponding doors of the vehicle, a further electrical lock 142e for locking and unlocking a rear hatch and an electronic immobilizer 144 for blocking or unblocking use of a vehicles engine 146.

The mobile device 150 comprises at least one processor 160 and associated memory 162 for executing programs stored therein. In case the mobile device 150 is a smartphone, application specific programs are usually referred to as Apps. However, in case the mobile device 150 takes another form, such as a stand-alone remote controller for a vehicle, other terminology such as control program or function may be used.

Similar to the car 110, the mobile device 150 also comprises one or more transceivers to communicate using different communication networks or protocols. In the depicted embodiment, the mobile device 150 comprises a UWB transceiver 172, a BLE transceiver 174 and a GSM-, LTE-, 5G- or similar transceiver 176 for communication with a public telecommunication network. While these are shown as separate entities in Fig. 1, the skilled person will understand that these may be implemented at least in part using common hardware components, i.e. coding and encoding circuitry, signal processing circuitry, radio frequency circuitry, antennas or the like.

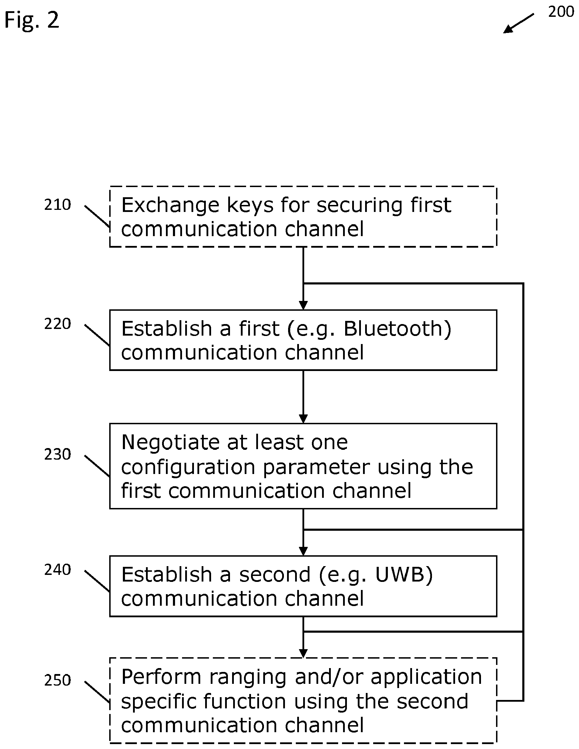

In operation, program code executed by the controller 120 of the vehicle 110 and the processor 160 of the mobile device 150 may communicate with one another by means of one or several communication protocols using corresponding transceivers to implement touchless access to the vehicle 110 as detailed below with respect to Figures 2 to 7.

Fig. 2 shows, in a schematic manner, a method 200 for establishing a short-range wireless connection between a mobile device and a vehicle according to an embodiment of the present disclosure.

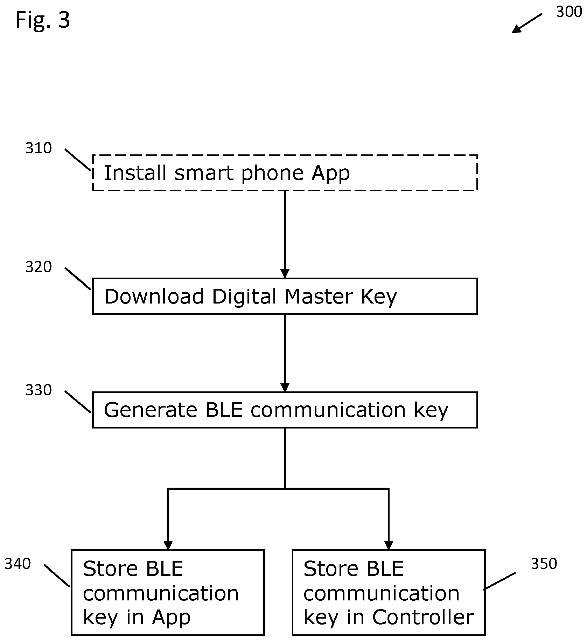

In a first, optional step 210, secure communication keys are generated by and/or exchanged between respective communications parties, for example the controller 120 of the vehicle 100 and the processor 160 of the mobile device 150. Such keys may be used to secure the subsequent communication between the two devices against various electronic attacks and threats. In the described example, the communication channel established in subsequent step 220 can be protected directly or indirectly based on the cryptographic keys generated and stored in step 210. Cryptographic methods for key generation and distribution are known from the prior art. Their use in the described scenario is further detailed below with respect to Fig. 3.

In a second step 220, a first communication channel between the mobile device 150 and the controller 120 of the vehicle 110 is established using a first communication protocol. The first communication protocol provides procedures for *ad hoc* discovery and pairing of devices in a short-range, personal area network (PAN). In the described embodiment, the Bluetooth Low Energy (BLE) protocol is used for this purpose. For discovery, at least one of the devices transmits a regular beacon signal that can then be detected by the other device. The other device may then request establishment of a communication channel by sending a corresponding request message. If the request is confirmed by one or more confirmation or set-up messages, a corresponding communication channel will be set-up and can be used for data exchange between the mobile device 150 and the controller 120 of the vehicle. In the described example, this channel is encrypted based on the communication keys generated in step 210.

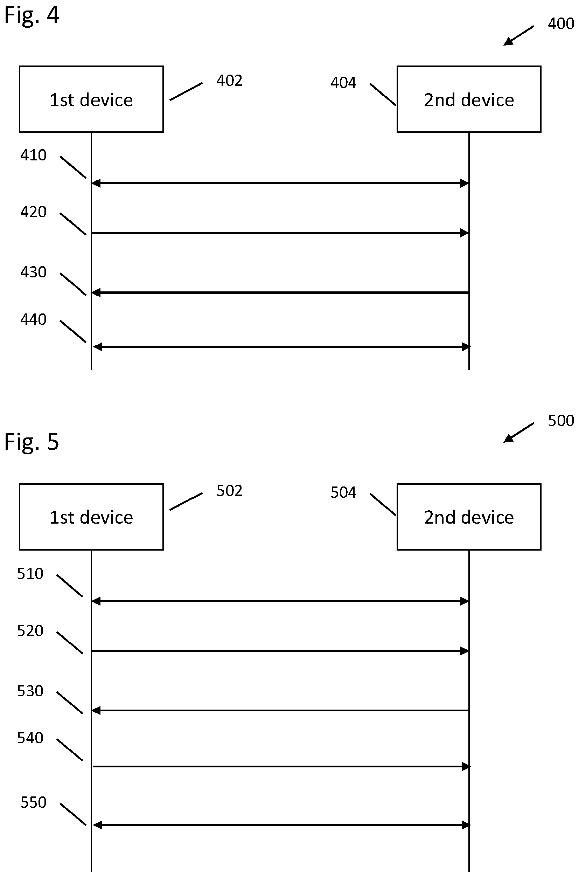

In a third step 230, the communication channel established in step 220 is used to negotiate at least one configuration parameter between the mobile device 150 and the at least one controller 120 of the vehicle 110. In the described embodiment, the at least one configuration parameter is used to establish a second communication channel for an application specific function. More particularly, the configuration parameter is used to configure respective UWB transceivers 132 and 172 of the vehicle 110 and the mobile device 150, respectively, such that they may start a cryptographically secure ranging procedure. The parameters exchanged typically belong to a relatively low communication layer, e.g. a physical (PHY) layer or medium access control (MAC) layer, and are required to establish the second communication channel between the two devices. Different procedure may be used to discover suitable parameters, as later described with reference to Figs. 4 to 6.

In a fourth step 240, a second communication channel between the mobile device 150 and the controller 120 of the vehicle 110 is established using a second communication protocol based on the at least one configuration parameter negotiated in step 230. The second communication protocol is used in a desired application scenario, for example for a ranging function of a touchless vehicle access system. In the described embodiment, the IEEE 802.15.4 protocol for Ultra-Wideband (UWB) communication is used, which allows, among others, cryptographically secure ranging. To establish the channel, the UWB transceivers 132 and 172 of the vehicle 110 and the mobile device 150, respectively, are configured to co-operate with one another based on the at least one configuration parameter previously negotiated in step 230. For example, a frequency band, a timing grid, and seed information for starting a secure UWB communication can be set up as explained in more detail later.

In an optional fifth step 250, the second communication channel can be used for an application specific function. For example, the controller 120 may unlock the doors and/or hatch of the vehicle 110 once the transceivers 132 have successfully performed ranging with the transceiver 172 and the controller has established that the mobile device 150 has come within a predetermined distance from the vehicle or specific part thereof, such as a door handle. Alternatively or in addition, the controller 120 may deactivate the immobilizer 144 once the mobile device 150 is placed within a predetermined zone or compartment within the vehicle 110, for example close to a driver's seat or in a special compartment for holding the mobile device 150 during operation of the vehicle 110.

For example, the following specific steps may be performed when a user of a mobile device, such as a smart phone with preinstalled digital car key, approaches a vehicle:

1. A BLE radio connection is established between at least one transceiver of the mobile device and at least one corresponding transceiver of the vehicle.

2. A data channel of the BLE radio connection is forwarded from the one or more transceivers of the vehicle to at least controller of the vehicle.

3. The mobile device sends a first message to the at least controller of the vehicle, comprising a supported UWB configuration of the mobile device.

4. The at least controller of the vehicle controller sends a second message back to the mobile device, comprising a common set of UWB configuration parameters supported by one or more UWB transceivers of the vehicle and the UWB configuration of the mobile device.

5. The mobile device sends a third message to the at least controller of the vehicle, comprising a specific UWB configuration from the common set received in step 4 above, which is to be used for a subsequent UWB communication.

6. The at least one controller forwards the specific UWB configuration to each of the UWB transceivers of the vehicle.

7. A UWB communication between the mobile device and the UWB transceivers of the vehicle is started.

It should be noted that the exact number of messages and their order exchanged in steps 3 to 5 above may be modified as appropriate. Moreover, in case in step 5 no common configuration can be established based on an initial subset of configuration parameters included in steps 3 or 4 based on initial quality requirements or other preferences, steps 3 to 5 may be repeated with lowered quality requirements or fewer preferences to conclude on a mutually agreed set of common configuration parameters. Of course, the above messages may also comprise parameters arbitrarily set by one of the devices without negotiations as detailed in more detail later with respect to a specific implementation example. Also, the respective roles of the mobile device and the controller of the vehicle may be switched.

Fig. 3 shows, in a schematic manner, a process for initializing communication keys for use with a mobile device and a vehicle according to an embodiment of the present disclosure. For example, the method of Fig. 3 may be performed by the processor 160 of the mobile device 150 and the controller 120 of the vehicle 110 of Fig. 1.

In an optional first step 310, the user may install a management App on his or her smart phone and downloads personal user and vehicle data stored by the vehicle manufacturer. For example, the user may install the "Connected Drive" App of BMW and logs into his personal account using user credentials received on another communication channel. Alternatively, the required functionality may already be part of the smart phone operating system, such as iOS or Android.

After authenticating the user towards a server of the vehicle manufacturer, in a second step 320, the App or other software component may securely download and store a so called digital master key identifying the user as the owner or main user of a corresponding vehicle. The data exchanged between the smart phone and the server of the vehicle manufacturer is typically exchanged over a public telecommunication or data network, such as the Internet, and is secured using conventional data protections mechanisms, such as a Secure Socket Layer (SSL) and/or Hypertext Transfer Protocol Secure (HTTPS).

In a third step 330, a communication key for securing a first communication channel between the smart phone and the controller of the vehicle is automatically or manually created by the App or other software component of the smart phone or a software component of the server of the vehicle manufacturer. After their generation, identical symmetric or corresponding asymmetric keys are store in a first secure storage location accessible to the smart phone in step 340 and in a second secure storage location accessible to the controller in step 350.

By generating and then storing corresponding communication keys, the smart phone in effect becomes paired to the vehicle. This pairing is based on out-of-band (OOB) communication, i.e. the data required for securely pairing the smart phone and the vehicle may not be exchanged over the Bluetooth connection itself. OOB pairing is part of the Bluetooth Low Energy standard. Unlike pairing of arbitrary Bluetooth devices, the App or other software component of the smart phone may generate a new secure BLE communication key based on the master key downloaded from the vehicle manufacturer and transmit it indirectly via the server of the vehicle manufacturer to a controller of the vehicle. For example, the App or other software component of the smart phone may communicate the BLE communication key over a secure internet connection, e.g. a SSL/TLS based HTTPS connection, to a central register of the vehicle manufacturer. From there, the BLE communication key may be forwarded via a secure channel of a public telecommunication network and the transceiver 136 to the controller 120. Alternatively, the BLE communication key may also be generated by a corresponding software component running on the server of the vehicle manufacturer and then be communicated to both the controller of the vehicle and the App or other software component of the smart phone. It is worth noting that BLE communication keys are static or at least semi-static and can be used over a long period of time. Accordingly, once generated and stored by the two devices, the above steps 310 to 350 do not need to be repeated each time the user is trying to unlock or otherwise access his or her vehicle.

Figs. 4 to 6 show a two-, three- and four-message negotiation processes according to different embodiments of the present disclosure. These processes may be used to implement step 230 above for negotiating, using a first communication channel such as a BLE connection established in step 220, a configuration of a second communication channel, such as a UWB connection in step 240. Figures 3 to 5 concentrate on the messages exchanged between the vehicle 110 and the mobile device 150. Certain aspects, such as the specific hardware or software units generating the respective messages, have been omitted for the sake of clarity. Moreover, for the sake of generality, the respective devices are referred to as first device and second device, respectively. Depending on the application requirements or the party starting a specific process, the mobile device 150 may represent the first device and a corresponding entity of the vehicle 110, such as the controller 120, may represent the second device or vice versa.

Fig. 4 shows a two-message negotiation process 400 for negotiating a UWB configuration between a first device 402, e.g. the mobile device 150, and a second device 404, e.g. the controller 120, according to an embodiment of the present disclosure.

Initially, A BLE radio connection 410 is established between the vehicle 110 and the mobile device 150. As described above with regard to step 220, most of the lower level protocol aspects are handled by the respective transceivers 134 and 174, respectively, in accordance with the requirements of the BLE standard. Once established, a BLE data channel is forwarded from the transceiver 134 via a bus system, such as a CAN bus, to the controller 120 of the vehicle 110.

Once the BLE data channel is set up, the first device 402 sends a first message 420 to the second device 404, which contains data about configuration options supported by the first device 402. This data may be encoded in different formats. For example, the data may contain maximum or minimum values of individual parameters and/or one or more lists of supported parameter values. Preferably, the first message may comprise one entry or message part for each configuration parameter to be negotiated. Alternatively, the data may comprise a name or index of a complete set of configuration parameters, i.e. a set of UWB parameters typically used in combination. For example, the first device may indicate both a lowest and highest possible operating frequency and/or bandwidth it supports for UWB communication, or, alternatively, one of a plurality of standardized radio bands, i.e. UWB bands A, B, C or D.

The second device 404 compares the received configuration data with its own configuration options and requirements, and responds with a second message 430. The second message 430 contains data about a specific configuration supported by both the first device 402 and the second device 404, i.e. data identifying a specific setting for each one of the configuration parameters to be negotiated. Again, this data may be encoded in different formats, either as indicated above or by means of one or more indices or other pointers to specific configuration parameters transmitted with the first message 420.

Based on the specific configuration parameters, the controller 120 of the vehicle 110 provides corresponding configuration data to each one of the UWB transceivers 132, and the processor 160 of the mobile devices configures the UWB transceiver 172 accordingly. Thereafter, the transceivers 132 and 172 establish a UWB radio connection 440 between the vehicle 110 and the mobile device 150.

Fig. 5 shows an alternative, three-message negotiation process 500 for negotiating a UWB configuration between a first device 502, e.g. the mobile device 150, and a second device 504, e.g. the controller 120, according to another embodiment of the present disclosure.

As detailed before with respect to connection 410, a BLE radio connection 510 is established between the vehicle 110 and the mobile device 150. Once the BLE data channel is established, the first device 502 sends a first message 520 to the second device 504, which contains data about configuration options supported by the first device 502. This data may be encoded in different formats as detailed above with respect to message 420.

The second device 504 compares the received data with its own configuration options and responds with a second message 530. The second message 530 contains data about configurations supported by both the first device 502 and the second device 504, i.e. an intersecting set of configuration options contained in the first message 520 and the configuration options stored within the second device 504. Again, this data may be encoded in different formats, either as indicated above or by means of one or more indices or other pointers to one or several of the configuration parameters transmitted with the first message 520.

Now both devices 502 and 504 are aware of each other's capabilities or requirements. However, based on further considerations, such as a current radio environment, not all available configuration parameters may work equally well. Accordingly, the first device 502 sends a third message 540 to the second device 504, which contains a specific selection for each applicable configuration parameter. For example, the first device may select a frequency band or timing scheme with the highest expected signal to noise ratio (SNR) for the second communication channel.

As above, the controller 120 of the vehicle 110 provides corresponding configuration data to each one of the UWB transceivers 132, and the processor 160 of the mobile devices configures the UWB transceiver 172 accordingly. Based on this configuration, the transceivers 132 and 172 establish a UWB radio connection 550 between the vehicle 110 and the mobile device 150.

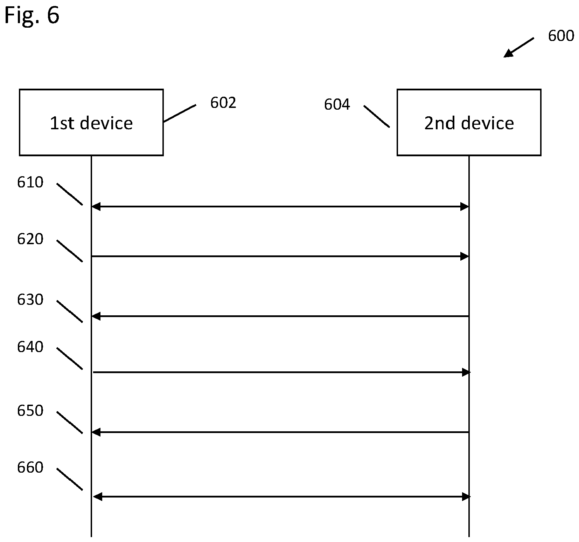

Fig. 6 shows another alternative, four-message negotiation process 600 for negotiating a UWB configuration between a first device 602, e.g. the mobile device 150, and a second device 604, e.g. the controller 120, according to another embodiment of the present disclosure.

As detailed before with respect to connection 410, a BLE radio connection 610 is established between the vehicle 110 and the mobile device 150. Once the BLE data channel is established, the first device 602 sends a first message 620 to the second device 604, which contains data about configuration options supported by the first device 602. This data may be encoded in different formats as detailed above with respect to message 420.

The second device 604 compares the received data with its own configuration options and responds with a second message 630. As detailed before with respect to message 530, the second message 630 contains data about configuration options supported by both the first device 602 and the second device 604, and may be encoded in different formats.

Again, both devices 602 and 604 are aware of each other's capabilities. However, based on further considerations, such as a current radio environment, not all available options may work equally well. Accordingly, the first device 602 sends a third message 640 to the second device 604, which contains one or more preferred options for each applicable configuration parameter. For example, the first device 602 may pre-select available frequency bands or timing scheme with SNRs above a preferred threshold.

The second device 604 considers the preferred options provided by the first device 602 and compares the preferred configuration parameters with its own preferences. Based on this comparison, the second device 604 sends a fourth message 650 to the first device 602, which contains a specific selection for each applicable configuration parameter. For example, the second device 604 may select a frequency band or timing scheme having an expected SNR above a required threshold for all the UWB transceivers 132 of the vehicle 110 and the transceiver 172 of the mobile device 150.

As above, the controller 120 of the vehicle 110 provides corresponding configuration data to each one of the UWB transceivers 132, and the processor 160 of the mobile devices configures the UWB transceiver 172 accordingly.

Based on this configuration, the transceivers 132 and 172 establish a UWB radio connection 660 between the vehicle and the mobile device.

Application Scenario: Smartphone based Digital Car Key application

In the below application scenario, a smart phone of a user is registered as digital key to access a particular car using Bluetooth LE (BLE) and Ultra-wideband (UWB) technology. The operating system of the smart phone provides a dedicated key storage component for storing a digital master key that identifies its holder as authorized user and allows the authorized user to pair the smart phone with the vehicle without physically going to a dealer or other authorized entity of a supply chain. For security reasons, the key storage component may be implemented as dedicated hardware unit or specially protected portion of a general purpose chipset, and may be referred to as "secure element", "secure enclave", "hardware security module'", or the like. Access to the dedicated key storage is limited to a protected interface and authorized applications or functions of the operating system only. Possession of the smart phone after completion of the pairing procedure allows comfortable, automatic unlocking of the car based on UWB ranging. Unlocking of the car does not require any other form of user interaction or authorization, e.g. pushing a button, entering a password or PIN, verifying a biometric feature, or the like. Thus, the access to the vehicle can be considered "touch free".

The described application scenario makes use of an application specific UWB protocol for ranging, i.e. determining the distance, between two distinct devices by exchanging a predefined sequence of Packets. This protocol is referred to as Digital Car Key (DCK) Ranging Protocol. In the described application scenario, each initiator or first device, can support a plurality of ranging sessions with different responding entities, e.g. multiple vehicles or other devices providing ranging services. In the following, without lack of generality, the ranging session with the vehicle whose configuration parameter is to be initialised is therefore referred to as *k*-th ranging session.

At a MAC layer, the DCK UWB protocol may define a hierarchical timing grid in terms of Chaps, Slots, Rounds, Ranging Blocks and Ranging Sessions. Each Ranging Session may comprise 1 to a maximum number of Ranging Blocks, e.g. 1 to 65535 Ranging Blocks. During a Ranging Session multiple ranging exchanges are carried out with a common, session specific configuration. Each Ranging Block comprises 1 to $N_{Round}^{k}$ Ranging Rounds. Within a given Ranging Block *i,* a single ranging exchange takes place in a predefined Round *s = Round_Idx(i)* , wherein *Round_Idx(i)* is determined based on a hopping scheme in the time domain used to mitigate collisions with other ranging sessions.

Each Round is long enough to carry out one complete ranging exchange and comprises 1 to $N_{Slot\_per\_Round}^{k}$ Ranging Slots. Each Slot is long enough to transmit and process, by the UWB transceivers 132 and 172, a single Ranging Packet. The number of Slots allocated per Round may depend on the number of UWB transceivers 132 taking part in the ranging process. Moreover, as the processing capabilities of the involved UWB transceivers 132 and 172 may differ, the Slot lengths may need to be configured flexibly depending on the current UWB system configuration. The length of the each Slot is defined as an integer multiple of a Chap and may last from 1 to $N_{Chap\_per\_Slot}^{k}$ . A Chap represents the smallest unit of time at the MAC layer. Its duration may be set to a fixed value, e.g. $T_{Chap} = \frac{1}{3}\,ms$ .

In general, a ranging exchange according to the DCK Ranging Protocol is based on the transmission of a sequence of Ranging Packets by an initiator, such as the UWB transceiver 172 of the mobile device 150, and the reception of corresponding Response Packets from one or more responding devices, such as the plurality of UWB transceivers 132a-132d of the vehicle, during a single Ranging Round. That is to say, the DCK Ranging Protocol is a one-to-many protocol.

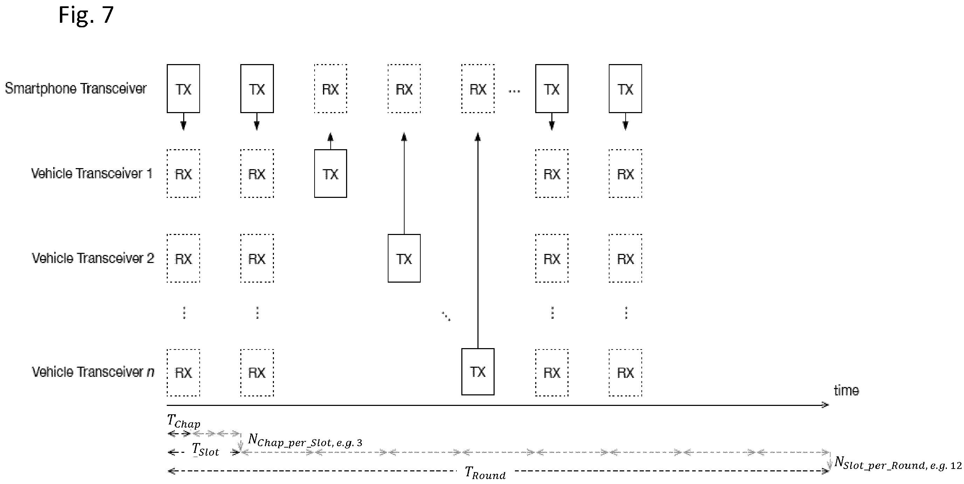

A specific UWB Ranging Exchange sequence may comprise a first UWB Packet *Pre-POLL,* followed by a *POLL* Packet sent from a single UWB transceiver 172 of the initiator to all transceivers 132 of the responding device. Each transceiver 132 of the responding device respond individually with a *Response* Packet. After ( $N_{Responder}^{k} + 2$ ) Slots, the initiator sends its *Final* Packet, and after ( $N_{Responder}^{k} + 3$ ) Slots a *Final_Data* Packet to complete the UWB Ranging Exchange. Details of the UWB Ranging Exchange and the corresponding MAC timing grid are shown in Fig. 7.

The timing of the individual Packets is defined by the DCK Ranging Protocol with respect to the current Ranging Session, Block, Round, and Slot and allows for the transmission of multiple UWB Packets of different types. As indicated above, the format of Ranging Blocks, Ranging Rounds and Ranging Slots is generally not fixed, but can be configured based on one or more configuration parameters as detailed below.

**EP 4 007 317 B1**

MAC and link layer configuration based on three configuration messages

The following implementation of the above application scenario is based on exchanging three messages. After establishing a BLE connection, the negotiation process is initiated by the smart phone acting as first, initiating or requesting device 502 and the controller 120 of the vehicle 110 acting as the second or responding device 504 in the sense of the terminology used below. Of course, similar application scenarios may also be implemented using a two- or four-message negotiation process and/or with a processing entity of the vehicle 100 acting as the first device 502 and the smart phone acting as the second device 504.

In this implementation, a first message comprises information about the minimum UWB Ranging Block duration and a list of Slot durations supported by the first device 502, i.e. the smart phone's UWB transceiver 172. In particular, the smart phone may generate a first message comprising a value for a first configuration parameter, $N_{RAN}^k$, which indicates a minimum time period between two subsequent UWB Ranging Blocks for the k-th Ranging Session, and a list of possible values for a second configuration parameter {$N_{Chap\_per\_slot}$}$_{SP}$, which indicates the list of Slot durations supported by the first device. In the present example, these times are indicated as multiples of respective base time units rather than as absolute times.

Specifically, the first configuration parameter $N_{RAN}^k$ is an integer value expressing a minimum distance, in the time domain, required by the mobile device 150 between two subsequent UWB Ranging Blocks. The configuration parameter $N_{RAN}^k$ is expressed in terms of a number of minimum Ranging Block durations, $T_{Block\_Min}$, of 96 ms, which define said minimum distance, i.e. $N_{RAN}^k = 1$ corresponds to a minimum Ranging Block distance of 96 ms, $N_{RAN}^k = 2$ corresponds to a minimum distance of 192 ms, etc.

Based on this parameter, the minimum duration of a Ranging Block, $T_{Block\_RAN}^k$, that can be supported by the initiator and, correspondingly the maximum supported ranging frequency, $f_{Ranging\_RAN}^k$, for the k-th Ranging Session can be determined by the second device as follows:

$$T_{Block\_RAN}^k = N_{PAN}^k \times T_{Block\_Min} = N_{RAN}^k \times 96ms$$

$$f_{Ranging\_RAN}^k = \frac{1}{T_{Block\_RAN}^k} = \frac{10.4166667}{N_{RAN}^k} Hz$$

The second configuration parameter {$N_{Chap\_per\_Slot}$}$_{SP}$ is expressed as list of integer values indicating Slot durations supported by the UWB transceiver of the mobile device. These durations are expressed in terms of multiples of Chaps, the basic unit of time of the MAC protocol, $T_{Chap}$, and correspond to the minimum distance between two UWB Ranging Packets transmitted one after the other, e.g. the successive transmission of a *Pre-POLL* Packet and a *POLL* Packet.

As an example, the initiator may select and send the following parameters to the responder device as part of the first message: $N_{RAN}^k = 2$ and {$N_{Chap\_per\_Slot}$}$_{SP}$ = {4,6,8}.

Based on the first and second configuration parameters, $N_{RAN}^k$ and {$N_{Chap\_per\_Slot}$}$_{SP}$, received from the initiator, the responder device determines a Ranging Session multiplier, $K_F^k$, configured to achieve a desired ranging interval, $T_{Block}^k$. In the described embodiment, the desired ranging interval is determined by the controller 120 of the vehicle. For example, the controller 120 may choose a small value for $N_{RAN}^k$ for faster UWB response times, e.g. for triggering a door handle or an engine start button, or a large value for $N_{RAN}^k$ to reduce an UWB packet collision rate in environments with many active BLE transmitters. The session multiplier $K_F^k$ is expressed as an integer of multiple of $T_{Block}^k$ as follows:

8

$$K_F^k = \frac{T_{Block}^k}{N_{RAN}^k \times T_{Block\_Min}} = \frac{T_{Block}^k}{T_{Block\_RAN}^k}$$

and

$$f_{Ranging}^k = \frac{1}{t_{Block}^k} = \frac{10.4166667}{N_{RAN}^k \times K_F^k} \, Hz$$

The responder device also determines the shortest Slot duration, $N_{Chap\_per\_Slot}^k$ , that is common between all Slot durations supported by the initiator $\{N_{Chap\_per\_Slot}\}_{SP}$ and Slot durations supported by all transceivers of the responder device $\{N_{Chap\_per\_Slot}\}_{CAR}$ as follows:

$$N_{Chap\_per\_Slot}^k = min\left(\{N_{Chap\_per\_Slot}\}_{SP} \bigcap \{N_{Chap\_per\_Slot}\}_{CAR}\right)$$

Finally, the responder device selects a number of Slots per Round, $N_{Slot\_per\_Round}^k$ , that is greater than or equal to ( $N_{Responder}^k + 4$ ) out of all possible values of Slots corresponding to $N_{Chap\_per\_Slot}^k$ as defined by the following table, which shows the number of valid Ranging Rounds per 96 ms:

| Rounds per 96 ms | | $N_{Slot\_per\_Round}^k$ | | | | | | | | | | | |
|---|---|---|---|---|---|---|---|---|---|---|---|---|---|
| $N_{Chap\ per\ Slot}^k$ | $T_{Slot}^k$ | 4 | 6 | 8 | 9 | 12 | 16 | 18 | 24 | 32 | 36 | 48 | 72 | 96 |
| 3 | 1000 ms | 24 | 16 | 12 | N/A | 8 | 6 | N/A | 4 | 3 | N/A | 2 | N/A | 1 |
| 4 | 1333 ms | 18 | 12 | 9 | 8 | 6 | N/A | 4 | 3 | N/A | 2 | N/A | 1 | N/A |
| 5 | 2000 ms | 12 | 8 | 6 | N/A | 4 | 3 | N/A | 2 | N/A | N/A | 1 | N/A | N/A |
| 8 | 2667 ms | 9 | 6 | N/A | 4 | 3 | N/A | 2 | N/A | N/A | 1 | N/A | N/A | N/A |

In the above, $K_F^k$ indicates the time period, expressed in multiples of $T_{Block\_Min}$ = 96 ms, between subsequent UWB ranging exchanges desired by the controller 120, considering the timing parameters $N_{RAN}^k$ and $N_{Chap\_per\_Slot}$ supported by the transceivers 132, wherein $K_F^k \geq N_{RAN}^k$ . The parameter $N_{Chap\_per\_Slot}$ is the smallest, or best, element of the UWB Packet distances supported by both the transceivers of the initiator and the responding device. $N_{Slot\_per\_Round}^k$ is equal to or larger than the number of UWB Packets per UWB Ranging Round, which is dependent on the number of transceivers in the vehicle. In case the required number of UWB Packets per UWB Ranging Round does not match a value from the table above, a number of empty Slots is added to the UWB Ranging Block for padding it to the required round length.

The values for $K_F^k$ , $N_{Chap\_per\_Slot}$ and $N_{Slot\_per\_Round}^k$ are included as third to fifth configuration parameter in a second message communicated from the responding device to the initiator. Based on this, the initiator determines a final set of configuration parameters and returns it to the responding device for setting up the UWB Ranging Session. In the described implementation, the final set includes the parameters $STS\_Index0^k$, $UWB_{time0}^k$ , $HOP\_Key\_RW^k$, $Sync\_Code Index$, $UWB\_Session\_ID^k$ and $Device\_ID\_Initiator$. Unless otherwise stated, these parameters belong to the MAC layer of the DCK Ranging Protocol.

The configuration parameter *STS_Index*0$^k$ is a pseudorandom value drawn from a seeded cryptographically secure pseudo-random number generator used for the encrypted ranging procedure and belongs to the link layer. The configuration parameter $UWB_{time0}^{k}$ indicates a point in time, at which the UWB Ranging Session starts. It represents a timestamp of the UWB clock of the initiator, i.e. the smart phone. The specific reference used to start the UWB clock may be implementation dependent. For example, the initiator may decide to start the UWB clock at value zero upon BLE connection and keep it running from then on. In this case configuration parameter $UWB_{time0}^{k}$ would be "relative" to zero. However, in another implementation, the UWB clock may be initialized via a known GSM or GPS clock, resulting in a non-zero clock value at the BLE connection, e.g., "2020-11-04 12:34:56.123456 UTC+1". In this case, an absolute start time, e.g. $UWB_{time0}^{k}$="2020-11-04 12:34:59.123456 UTC+1", may be used to indicate a start of the UWB connection 3s later in relation to the BLE connection. That is to say, the timing of the first communication channel or an auxiliary communication channel may be used to indirectly define the timing of the second communication channel. The configuration parameter *HOP_Key_RW*$^k$ serves to initialize a pseudo-random number generator used for calculating the transmission time of subsequent Ranging Rounds within a given Ranging Block based on the function *Round_Idx*(*i*) as described above. The configuration parameter *Sync_Code_Index* belongs to the PHY layer and defines the use of a predefined sync code as defined, for example, in a physical layer specification of an underlying protocol, e.g. IEEE 802.15.4. The configuration parameter *UWB_Session_ID*$^k$ serves as a common Session identifier to map a given UWB Ranging Session to a given digital car key, e.g. a car key stored in a key storage area of the smart phone acting as initiator and belongs to the link layer. The configuration parameter *Device_ID_Initiator* serves as a common identifier of a MAC header of UWB packets to map the individual UWB Packets to the common Session identifier *UWB_Session_ID*$^k$.

Based on the exchange of the above configuration parameters, the initiator and responding device obtain full knowledge of the required parameters to initialize the PHY layer, the MAC layer and parts of the link layer. In particular, it defines the flexible timing grid of the DCK Ranging Protocol as described above, which is configuration specific and not fixed by the underlying communication standards, such as the IEEE 802.15.4 standard or the DCK Ranging Protocol itself. In consequence, the mobile device acting as initiator and the controller of the vehicle acting as responder can set-up their respective transceivers to start a UWB ranging procedure at the indicated time and with the corresponding PHY, MAC and link layer parameters, enabling a fast and reliable detection and decoding of exchanged UWB Packets.

It should be noted that the parameters indicated above only have exemplary character. If one or several of the above or similar parameters are fixed, e.g. by a further refined standard or proprietary agreement, they may be excluded from the negotiation process for efficiency reasons.

The various aspects and implementations details described above may be combined in a variety of ways. For example, parameters may be added or removed from the disclosed messages used for negotiation. Moreover, the number of messages may be varied, or the entire negotiation process may be repeated for different configuration aspects. Similar, while the above implementation makes use of Bluetooth Low Energy and Ultra Wideband communication standards, other wireless access networks from the IEEE 802.15.x family of standards, such as WiFi, NFC or the like, may be used for establishing the first and/or second communication link.

**Claims**

1. Method (200) for establishing a short-range wireless connection between a mobile device (150) and a vehicle (110), comprising:

   establishing (220) a first communication channel (410, 510, 610) between the mobile device (150) and at least one controller (120) of the vehicle (110) using a first communication protocol;
   negotiating (230) a plurality of configuration parameters between the mobile device (150) and the at least one controller (120) of the vehicle (110) via the first communication channel (410, 510, 610); and

   establishing (240) a second communication channel (440, 540, 660) between the mobile device (150) and at least one transceiver unit (132) of the vehicle (110) using a second communication protocol based on the negotiated plurality of configuration parameters, **characterised in that**:
   the negotiated plurality of configuration parameters comprises a session multiplier parameter for achieving a supported Ranging Block duration, $K_{F}^{k}$, a supported Slot duration parameter set, {$N_{Chap\_Per\_Slot}$}$_{SP}$ or {$N_{Chap\_per\_Slot}$}$_{Car}$, representing a list of slot durations respectively supported by the mobile device and the vehicle, and a shortest common Slot duration parameter, $N^k_{Chap\_per\_Slot}$.

2. The method of claim 1, wherein the negotiated plurality of configuration parameters comprises at least one of a physical, PHY, layer configuration parameter of the second communication channel (440, 540, 660), a medium access control, MAC, layer configuration parameter of the second communication channel (440, 540, 660); and a link layer configuration parameter of the second communication channel (440, 540, 660).

3. The method of claim 1 or 2, wherein the negotiated plurality of configuration parameter further comprises at least one of the following parameters:

   - a communication channel, frequency or bandwidth parameter;
   - a synchronization section configuration parameter, *Sync_Code_Index*;
   - a supported minimum Ranging Block duration parameter, $N^k_{RAN}$;
   - a number of Slots per Round, $N^k_{Slot\_per\_Round}$;
   - a start time parameter, $UWB^k_{time0}$;
   - a seed parameter for computing a pseudo-random offset of a transmission timing, *HOP_Key_RW^k*;
   - a device identifier initiator parameter, *Device_ID_Initiator*;
   - a session identifier, *UWB_Session_ID^k*; and
   - a cryptographic pseudo-random number, *STS_Index0^k*.

4. The method of any one of claims 1 to 3, wherein the step of negotiating (240) the plurality of configuration parameters between the mobile device (150) and the at least one controller (120) of the vehicle (110) comprises:

   - generating and transmitting, by a first device (402, 502, 602) of one of the mobile device (150) and the at least one controller (120) of the vehicle (110), a first message (420, 520, 620) comprising data indicating a first set of configuration parameters supported by first device;
   - generating and transmitting, by the respective other, second device (404, 504, 604) of the mobile device (150) and the at least one controller (120) of the vehicle (110), a second message (430, 530, 630) comprising at least one configuration parameter comprised in a second set of configuration parameters supported by second device (404, 504, 604); and
   - selecting, by at least one of the first device (402, 502, 602) and the second device (404, 504, 604), a plurality of communication parameters comprised in the intersecting set of the first and the second set of the configuration parameters as the negotiated plurality of configuration parameters.

5. The method of claim 4, wherein the selecting step is performed by the second device (404) after receiving the first message, and the second message (430) comprises the negotiated configuration parameters.

6. The method of claim 4, wherein the second message (530) comprises data indicating a third set of configuration parameters supported by both the first device (502) and the second device (504), the selecting step is performed by the first device (502) after receiving the second message (530) and is based on at least one preference of the first device (502), the method further comprising:

   - transmitting, by the first device (502), a third message (540) comprising the negotiated configuration parameters to the second device (504).

7. The method of claim 4, wherein the second message (630) comprises data indicating a third set of configuration parameters supported by both the first device (602) and the second device (604), the selecting step is performed by the second device (604) and is based on at least one preference of the first device (602) and at least one preference of the second device (604), the method further comprising:

   - transmitting, by the first device (602) to the second device (604), a third message (640) comprising at least one configuration parameter preferred by the first device (602); and
   - transmitting, by the second device (604), a fourth message (650) comprising the negotiated configuration parameters to the first device (602).

8. The method of claim 4, wherein, when the intersecting set of the first set of configuration parameters and the second set of configurations reported using a first quality parameter is empty, at least the steps of generating and transmitting the first message (420, 520, 620) are repeated using a second quality parameter.

9. The method of any one of claims 1 to 8, wherein the step of establishing (220) the first communication channel comprises:

- generating (330) at least one communication key for secure communication between the mobile device (150) and the vehicle (110);
- storing (340) first information concerning the at least one communication key in a memory device of the mobile device (150); and
- storing (350) second information concerning the at least one communication key in a memory device of the vehicle (110); and
- establishing a secure first communication channel between the mobile device (150) and the at least one controller (120) of the vehicle (110) using the stored first and second information concerning the at least one communication key.

10. The method of any one of claims 1 to 9, wherein the first communication protocol is a communication protocol according to the Bluetooth standard of the Bluetooth Special Interest Group, in particular the Bluetooth Low Energy, BLE, communication protocol.

11. The method of any one of claims 1 to 10, wherein the second communication protocol is a communication protocol according to IEEE 802.15.4 standard, in particular an ultra-wideband, UWB, communication protocol.

12. The method of any one of claims 1 to 11, further comprising:

- performing (250) a cryptographically secure ranging procedure to establish a distance between the mobile device (150) and the at least one transceiver (132) of the vehicle (110) using the second communication protocol; and
- perform at least one of the following functions based on the established distance:

    ◦ unlocking at least one door of the vehicle (110);
    ◦ locking the at least one door of the vehicle (110);
    ◦ electronically unlocking at least one engine component; and
    ◦ electronically locking the at least one engine component.

13. A vehicle (110), comprising:

- at least one first transceiver (134) configured to establish a first communication channel with a mobile device (150) using a first communication protocol;
- at least one second transceiver (132) configured to establish a second communication channel with the mobile device (150) using a second communication protocol;
- at least one controller (120) connected to the first and second transceivers (132, 134), the controller (120) configured to perform the following steps:

    ◦ obtaining information on at least one first configuration parameter supported by the mobile device (150) based on at least one message received by the at least one first transceiver (134);
    ◦ obtaining information on a plurality of further configuration parameters supported by the at least one second transceiver (132); and instructing the at least one second transceiver (132) to establish the second communication channel with the mobile device (150) using at least the plurality of configuration parameters supported by both the mobile device (150) and the at least one second transceiver (132), **characterised in that**:
    the plurality of configuration parameters comprises a session multiplier parameter for achieving a supported Ranging Block duration, $K_F^k$, a supported Slot duration parameter set, $\{N_{Chap\_per\_Slot}\}_{SP}$ or $\{N_{Chap\_per\_Slot}\}_{Car}$, representing a list of slot durations respectively supported by the mobile device and the vehicle, and a shortest common Slot duration parameter, $N^k_{Chap\_per\_Slot}$.

**14.** The vehicle of claim 13, further comprising at least one of a door locking component and an electronic immobilizer (144), wherein the controller (120) is further configured to perform the following steps:

- instructing the at least one second transceiver (132) to perform a cryptographically secure ranging procedure to establish a distance between the mobile device (150) and the at least one second transceiver (132) of the vehicle (110) using the second communication protocol; and
- instruct at least one of the door locking component and the electronic immobilizer (144) to perform at least one of the following functions based on the established distance:

  ◦ unlocking at least one door of the vehicle;
  ◦ locking the at least one door of the vehicle;
  ◦ electronically unlocking at least one engine component; and
  ◦ electronically locking the at least one engine component.

**15.** Program code for execution by at least one processing component of a mobile device (150), which, when executed by the at least one processing component, performs the following steps:

establishing (220) a first communication channel (410, 510, 610) between the mobile device (150) and at least one controller (120) of a vehicle (110) using a first communication protocol;
negotiating (230) a plurality of configuration parameters with the at least one controller (120) of the vehicle (110) via the first communication channel (410, 510, 610); and
establishing (240) a second communication channel (440, 540, 660) with at least one transceiver unit (132) of the vehicle (110) using a second communication protocol based on the negotiated plurality of configuration parameters, **characterised in that**:
the negotiated plurality of configuration parameters comprises a session multiplier parameter for achieving a supported Ranging Block duration, $K^k_F$, a supported Slot duration parameter set, $\{N_{Chap\_per\_Slot}\}_{SP}$ or $\{N_{Chap\_per\_Slot}\}_{Car}$, representing a list of slot durations respectively supported by the mobile device and the vehicle, and a shortest common Slot duration parameter, $N^k_{Chap\_per\_Slot}$.

**Patentansprüche**

**1.** Verfahren (200) zum Herstellen einer drahtlosen Nahbereichsverbindung zwischen einer mobilen Vorrichtung (150) und einem Fahrzeug (110), umfassend:

Herstellen (220) eines ersten Kommunikationskanals (410, 510, 610) zwischen der mobilen Vorrichtung (150) und mindestens einer Steuerung (120) des Fahrzeugs (110) unter Verwendung eines ersten Kommunikationsprotokolls;
Aushandeln (230) einer Mehrzahl von Konfigurationsparametern zwischen der mobilen Vorrichtung (150) und der mindestens einen Steuerung (120) des Fahrzeugs (110) über den ersten Kommunikationskanal (410, 510, 610); und

Herstellen (240) eines zweiten Kommunikationskanals (440, 540, 660) zwischen der mobilen Vorrichtung (150) und mindestens einer Sendeempfängereinheit (132) des Fahrzeugs (110) unter Verwendung eines zweiten Kommunikationsprotokolls basierend auf der ausgehandelten Mehrzahl von Konfigurationsparametern, **dadurch gekennzeichnet, dass**:
die ausgehandelte Mehrzahl von Konfigurationsparametern einen Sitzungsmultiplikatorparameter zum Erreichen einer unterstützten Ranging-Block-Dauer, $K^k_F$, einen unterstützten Slot-Dauer-Parametersatz, $\{N_{Chap\_per\_Slot}\}_{SP}$ oder $\{N_{Chap\_per\_slot}\}_{Car}$, der eine Liste von Slot-Dauern darstellt, die jeweils von der mobilen Vorrichtung und dem Fahrzeug unterstützt werden, und einen kürzesten gemeinsamen Slot-Dauer-Parameter,

$N^k_{Chap\_per\_slot}$ umfasst.

2. Verfahren nach Anspruch 1, wobei die ausgehandelte Mehrzahl von Konfigurationsparametern mindestens einen von einem physikalischen, PHY, Schicht-Konfigurationsparameter des zweiten Kommunikationskanals (440, 540, 660), einem Medienzugriffssteuerungs-, MAC, Schicht-Konfigurationsparameter des zweiten Kommunikationskanals (440, 540, 660); und einem Verbindungsschicht-Konfigurationsparameter des zweiten Kommunikationskanals (440, 540, 660) umfasst.

3. Verfahren nach Anspruch 1 oder 2, wobei die ausgehandelte Mehrzahl von Konfigurationsparametern ferner mindestens einen der folgenden Parameter umfasst:

   - einen Kommunikationskanal-, Frequenz- oder Bandbreitenparameter;
   - einen Synchronisationsabschnitt-Konfigurationsparameter, *Sync_Code_Index;*
   - einen unterstützten minimalen Ranging-Block-Dauer-Parameter, $N^k_{RAN}$ ;
   - eine Anzahl von Slots pro Runde, $N^k_{Slot\_per\_round}$ ;
   - einen Startzeitparameter, $UWB^k_{time0}$ ;
   - einen Startparameter zum Berechnen eines Pseudozufallsversatzes eines Übertragungstimings, *HOP_Key_RW^k;*
   - einen Vorrichtungskennungs-Initiatorparameter, *Device_ID_Initiator;*
   - eine Sitzungskennung, *UWB_Session_ID^k;* und
   - eine kryptographische Pseudozufallszahl, *STS_Index0^k.*

4. Verfahren nach einem der Ansprüche 1 bis 3, wobei der Schritt des Aushandelns (240) der Mehrzahl von Konfigurationsparametern zwischen der mobilen Vorrichtung (150) und der mindestens einen Steuerung (120) des Fahrzeugs (110) umfasst:

   - Erzeugen und Übertragen, durch eine erste Vorrichtung (402, 502, 602) von einer von der mobilen Vorrichtung (150) und der mindestens einen Steuerung (120) des Fahrzeugs (110), einer ersten Nachricht (420, 520, 620), die Daten umfasst, die einen ersten Satz von Konfigurationsparametern anzeigen, die von der ersten Vorrichtung unterstützt werden;
   - Erzeugen und Übertragen, durch die jeweils andere, zweite Vorrichtung (404, 504, 604) der mobilen Vorrichtung (150) und der mindestens einen Steuerung (120) des Fahrzeugs (110), einer zweiten Nachricht (430, 530, 630), die mindestens einen Konfigurationsparameter umfasst, der in einem zweiten Satz von Konfigurationsparametern enthalten ist, die von der zweiten Vorrichtung (404, 504, 604) unterstützt werden; und
   - Auswählen, durch mindestens eine von der ersten Vorrichtung (402, 502, 602) und der zweiten Vorrichtung (404, 504, 604), einer Mehrzahl von Kommunikationsparametern, die im Schnittsatz des ersten und des zweiten Satzes der Konfigurationsparameter enthalten sind, als die ausgehandelte Mehrzahl von Konfigurationsparametern.

5. Verfahren nach Anspruch 4, wobei der Auswahlschritt von der zweiten Vorrichtung (404) nach dem Empfangen der ersten Nachricht durchgeführt wird und die zweite Nachricht (430) die ausgehandelten Konfigurationsparameter umfasst.

6. Verfahren nach Anspruch 4, wobei die zweite Nachricht (530) Daten umfasst, die einen dritten Satz von Konfigurationsparametern anzeigen, die sowohl von der ersten Vorrichtung (502) als auch von der zweiten Vorrichtung (504) unterstützt werden, wobei der Auswahlschritt von der ersten Vorrichtung (502) nach dem Empfangen der zweiten Nachricht (530) durchgeführt wird und auf mindestens einer Präferenz der ersten Vorrichtung (502) basiert, wobei das Verfahren ferner umfasst:

   - Übertragen, durch die erste Vorrichtung (502), einer dritten Nachricht (540), die die ausgehandelten Konfigurationsparameter umfasst, an die zweite Vorrichtung (504).

7. Verfahren nach Anspruch 4, wobei die zweite Nachricht (630) Daten umfasst, die einen dritten Satz von Konfigurationsparametern anzeigen, die sowohl von der ersten Vorrichtung (602) als auch von der zweiten Vorrichtung

14

(604) unterstützt werden, wobei der Auswahlschritt von der zweiten Vorrichtung (604) durchgeführt wird und auf mindestens einer Präferenz der ersten Vorrichtung (602) und mindestens einer Präferenz der zweiten Vorrichtung (604) basiert, wobei das Verfahren ferner umfasst:

- Übertragen, durch die erste Vorrichtung (602) an die zweite Vorrichtung (604), einer dritten Nachricht (640), die mindestens einen Konfigurationsparameter umfasst, der von der ersten Vorrichtung (602) bevorzugt wird; und
- Übertragen, durch die zweite Vorrichtung (604), einer vierten Nachricht (650), die die ausgehandelten Konfigurationsparameter umfasst, an die erste Vorrichtung (602).

8. Verfahren nach Anspruch 4, wobei, wenn der Schnittsatz des ersten Satzes von Konfigurationsparametern und des zweiten Satzes von Konfigurationen, die unter Verwendung eines ersten Qualitätsparameters gemeldet werden, leer ist, mindestens die Schritte des Erzeugens und Übertragens der ersten Nachricht (420, 520, 620) unter Verwendung eines zweiten Qualitätsparameters wiederholt werden.

9. Verfahren nach einem der Ansprüche 1 bis 8, wobei der Schritt des Herstellens (220) des ersten Kommunikationskanals umfasst:

- Erzeugen (330) mindestens eines Kommunikationsschlüssels für eine sichere Kommunikation zwischen der mobilen Vorrichtung (150) und dem Fahrzeug (110);
- Speichern (340) erster Information, die den mindestens einen Kommunikationsschlüssel betrifft, in einer Speichervorrichtung der mobilen Vorrichtung (150); und
- Speichern (350) zweiter Information, die den mindestens einen Kommunikationsschlüssel betrifft, in einer Speichervorrichtung des Fahrzeugs (110); und
- Herstellen eines sicheren ersten Kommunikationskanals zwischen der mobilen Vorrichtung (150) und der mindestens einen Steuerung (120) des Fahrzeugs (110) unter Verwendung der gespeicherten ersten und zweiten Information, die den mindestens einen Kommunikationsschlüssel betrifft.

10. Verfahren nach einem der Ansprüche 1 bis 9, wobei das erste Kommunikationsprotokoll ein Kommunikationsprotokoll gemäß dem Bluetooth-Standard der Bluetooth Special Interest Group ist, insbesondere das Bluetooth Low Energy, BLE, Kommunikationsprotokoll.

11. Verfahren nach einem der Ansprüche 1 bis 10, wobei das zweite Kommunikationsprotokoll ein Kommunikationsprotokoll gemäß dem IEEE 802.15.4-Standard ist, insbesondere ein Ultrabreitband, UWB, Kommunikationsprotokoll.

12. Verfahren nach einem der Ansprüche 1 bis 11, ferner umfassend:

- Durchführen (250) einer kryptographisch sicheren Entfernungsmessungsprozedur, um eine Entfernung zwischen der mobilen Vorrichtung (150) und dem mindestens einen Sendeempfänger (132) des Fahrzeugs (110) unter Verwendung des zweiten Kommunikationsprotokolls herzustellen; und
- Durchführen mindestens einer der folgenden Funktionen basierend auf der hergestellten Entfernung:

o Entriegeln mindestens einer Tür des Fahrzeugs (110);
o Verriegeln der mindestens einen Tür des Fahrzeugs (110);
o elektronisches Entriegeln mindestens einer Motorkomponente; und
o elektronisches Verriegeln der mindestens einen Motorkomponente.

13. Fahrzeug (110), umfassend:

- mindestens einen ersten Sendeempfänger (134), der konfiguriert ist, um einen ersten Kommunikationskanal mit einer mobilen Vorrichtung (150) unter Verwendung eines ersten Kommunikationsprotokolls herzustellen;
- mindestens einen zweiten Sendeempfänger (132), der konfiguriert ist, um einen zweiten Kommunikationskanal mit der mobilen Vorrichtung (150) unter Verwendung eines zweiten Kommunikationsprotokolls herzustellen;
- mindestens eine Steuerung (120), die mit dem ersten und zweiten Sendeempfänger (132, 134) verbunden ist, wobei die Steuerung (120) konfiguriert ist, um die folgenden Schritte durchzuführen:

o Erhalten von Information über mindestens einen ersten Konfigurationsparameter, der von der mobilen Vorrichtung (150) unterstützt wird, basierend auf mindestens einer Nachricht, die von dem mindestens einen ersten Sendeempfänger (134) empfangen wird;

o Erhalten von Information über eine Mehrzahl von weiteren Konfigurationsparametern, die von dem mindestens einen zweiten Sendeempfänger (132) unterstützt werden; und

Anweisen des mindestens einen zweiten Sendeempfängers (132), den zweiten Kommunikationskanal mit der mobilen Vorrichtung (150) unter Verwendung mindestens der Mehrzahl von Konfigurationsparametern herzustellen, die sowohl von der mobilen Vorrichtung (150) als auch dem mindestens einen zweiten Sendeempfänger (132) unterstützt werden, **dadurch gekennzeichnet, dass**:

die Mehrzahl von Konfigurationsparametern einen Sitzungsmultiplikatorparameter zum Erreichen einer unterstützten Ranging-Block-Dauer, $K_F^k$, einen unterstützten Slot-Dauer-Parametersatzes $\{N_{Chap\_per\_slot}\}_{SP}$ oder $\{N_{Chap\_per\_slot}\}_{Car}$, der eine Liste von Slot-Dauern darstellt, die jeweils von der mobilen Vorrichtung und dem Fahrzeug unterstützt werden, und einen kürzesten gemeinsamen Slot-Dauer-Parameter, $N_{Chap\_per\_slot}^k$ umfasst.

14. Fahrzeug nach Anspruch 13, ferner umfassend mindestens eines von einer Türverriegelungskomponente und einer elektronischen Wegfahrsperre (144), wobei die Steuerung (120) ferner konfiguriert ist, um die folgenden Schritte durchzuführen:

- Anweisen des mindestens einen zweiten Sendeempfängers (132), eine kryptographisch sichere Entfernungsmessungsprozedur durchzuführen, um eine Entfernung zwischen der mobilen Vorrichtung (150) und dem mindestens einen zweiten Sendeempfänger (132) des Fahrzeugs (110) unter Verwendung des zweiten Kommunikationsprotokolls herzustellen; und
- Anweisen mindestens eines von der Türverriegelungskomponente und der elektronischen Wegfahrsperre (144), mindestens eine der folgenden Funktionen basierend auf der hergestellten Entfernung durchzuführen:

o Entriegeln mindestens einer Tür des Fahrzeugs;
o Verriegeln der mindestens einen Tür des Fahrzeugs;
o elektronisches Entriegeln mindestens einer Motorkomponente; und
o elektronisches Verriegeln der mindestens einen Motorkomponente.

15. Programmcode zur Ausführung durch mindestens eine Verarbeitungskomponente einer mobilen Vorrichtung (150), der, wenn er durch die mindestens eine Verarbeitungskomponente ausgeführt wird, die folgenden Schritte durchführt:

Herstellen (220) eines ersten Kommunikationskanals (410, 510, 610) zwischen der mobilen Vorrichtung (150) und mindestens einer Steuerung (120) eines Fahrzeugs (110) unter Verwendung eines ersten Kommunikationsprotokolls;

Aushandeln (230) einer Mehrzahl von Konfigurationsparametern mit der mindestens einen Steuerung (120) des Fahrzeugs (110) über den ersten Kommunikationskanal (410, 510, 610); und

Herstellen (240) eines zweiten Kommunikationskanals (440, 540, 660) mit mindestens einer Sendeempfängereinheit (132) des Fahrzeugs (110) unter Verwendung eines zweiten Kommunikationsprotokolls basierend auf der ausgehandelten Mehrzahl von Konfigurationsparametern, **dadurch gekennzeichnet, dass**:

die ausgehandelte Mehrzahl von Konfigurationsparametern einen Sitzungsmultiplikatorparameter zum Erreichen einer unterstützten Ranging-Block-Dauer, $K_F^k$, einen unterstützten Slot-Dauer-Parametersatzes, $\{N_{Chap\_per\_slot}\}_{SP}$ oder $\{N_{Chap\_per\_slot}\}_{Car}$, der eine Liste von Slot-Dauern darstellt, die jeweils von der mobilen Vorrichtung und dem Fahrzeug unterstützt werden, und einen kürzesten gemeinsamen Slot-Dauer-Parameter, $N_{Chap\_per\_slot}^k$ umfasst.

## Revendications

1. Un procédé (200) pour établir une connexion sans fil à courte portée entre un dispositif mobile (150) et un véhicule (110), comprenant :

l'établissement (220) d'un premier canal de communication (410, 510, 610) entre le dispositif mobile (150) et au moins un contrôleur (120) du véhicule (110) en utilisant un premier protocole de communication ;

la négociation (230) d'une pluralité de paramètres de configuration entre le dispositif mobile (150) et l'au moins un contrôleur (120) du véhicule (110) via le premier canal de communication (410, 510, 610) ; et

l'établissement (240) d'un second canal de communication (440, 540, 660) entre le dispositif mobile (150) et au moins une unité d'émetteur-récepteur (132) du véhicule (110) en utilisant un second protocole de communication sur la base de la pluralité négociée de paramètres de configuration, **caractérisé en ce que** :

la pluralité négociée de paramètres de configuration comprend un paramètre de multiplicateur de session pour atteindre une durée de bloc de télémétrie, $K_F^k$ , prise en charge, un ensemble de paramètres de durée de slot, $\{N_{Chap\_per\_Slot}\}_{SP}$ ou $\{N_{Chap\_per\_Slot}\}_{Car}$ , prise en charge, représentant une liste de durées de slot respectivement prises en charge par le dispositif mobile et le véhicule, et un paramètre de durée de slot commune la plus courte, $N_{Chap\_per\_Slot}^k$ .

2. Le procédé selon la revendication 1, dans lequel la pluralité négociée de paramètres de configuration comprend au moins un parmi un paramètre de configuration de couche physique, PHY, du second canal de communication (440, 540, 660), un paramètre de configuration de couche de contrôle d'accès au support, MAC, du second canal de communication (440, 540, 660) et un paramètre de configuration de couche de liaison du second canal de communication (440, 540, 660).

3. Le procédé selon la revendication 1 ou 2, dans lequel la pluralité négociée de paramètres de configuration comprend en outre au moins un des paramètres suivants :

- un paramètre de fréquence, de largeur de bande, ou de canal de communication ;
- un paramètre de configuration de section de synchronisation, *Sync_Code_Index* ;
- un paramètre de durée minimale de bloc de télémétrie, $N_{RAN}^k$ , prise en charge ;
- un nombre de slots par tour, $N_{Slot\_per\_Round}^k$ ;
- un paramètre de temps de début, $UWB_{time0}^k$ ;
- un paramètre d'amorçage pour calculer un décalage pseudo-aléatoire d'un séquencement de transmission, *HOP_Key_RW^k* ;
- un paramètre d'initiateur d'identificateur de dispositif, *Device_ID_Initiator* ;
- un identificateur de session, *UWB_Session_ID^k* ; et
- un nombre pseudo-aléatoire cryptographique, *STS_Index0^k*.

4. Le procédé selon l'une des revendications 1 à 3, dans lequel l'étape de négociation (240) de la pluralité de paramètres de configuration entre le dispositif mobile (150) et l'au moins un contrôleur (120) du véhicule (110) comprend :

- la génération et la transmission, par un premier dispositif (402, 502, 602) d'un parmi le dispositif mobile (150) et l'au moins un contrôleur (120) du véhicule (110), d'un premier message (420, 520, 620) comprenant des données indiquant un premier ensemble de paramètres de configuration pris en charge par le premier dispositif ;
- la génération et la transmission, par l'autre respectif second dispositif (404, 504, 604) du dispositif mobile (150) et de l'au moins un contrôleur (120) du véhicule (110), d'un deuxième message (430, 530, 630) comprenant au moins un paramètre de configuration compris dans un deuxième ensemble de paramètres de configuration pris en charge par le second dispositif (404, 504, 604) ; et
- la sélection, par au moins un parmi le premier dispositif (402, 502, 602) et le second dispositif (404, 504, 604), d'une pluralité de paramètres de communication compris dans l'ensemble commun au premier et au deuxième ensemble des paramètres de configuration en tant que pluralité négociée de paramètres de configuration.

5. Le procédé selon la revendication 4, dans lequel l'étape de sélection est réalisée par le second dispositif (404) après la réception du premier message, et le deuxième message (430) comprend les paramètres de configuration négociés.

6. Le procédé selon la revendication 4, dans lequel le deuxième message (530) comprend des données indiquant un troisième ensemble de paramètres de configuration pris en charge à la fois par le premier dispositif (502) et le second dispositif (504), l'étape de sélection est réalisée par le premier dispositif (502) après la réception du deuxième message (530) et est basée sur au moins une préférence du premier dispositif (502), le procédé comprenant en outre :

- la transmission, par le premier dispositif (502), d'un troisième message (540) comprenant les paramètres de configuration négociés au second dispositif (504).

7. Le procédé selon la revendication 4, dans lequel le deuxième message (630) comprend des données indiquant un troisième ensemble de paramètres de configuration pris en charge à la fois par le premier dispositif (602) et le second dispositif (604), l'étape de sélection est réalisée par le second dispositif (604) et est basée sur au moins une préférence du premier dispositif (602) et au moins une préférence du second dispositif (604), le procédé comprenant en outre :

- la transmission, par le premier dispositif (602) au second dispositif (604), d'un troisième message (640) comprenant au moins un paramètre de configuration préféré par le premier dispositif (602) ; et
- la transmission, par le second dispositif (604), d'un quatrième message (650) comprenant les paramètres de configuration négociés au premier dispositif (602).

8. Le procédé selon la revendication 4, dans lequel, lorsque l'ensemble commun au premier ensemble de paramètres de configuration et au deuxième ensemble de configurations rapporté en utilisant un premier paramètre de qualité est vide, au moins les étapes de génération et de transmission du premier message (420, 520, 620) sont répétées en utilisant un second paramètre de qualité.

9. Le procédé selon l'une des revendications 1 à 8, dans lequel l'étape d'établissement (220) du premier canal de communication comprend :

- la génération (330) d'au moins une clé de communication pour une communication sécurisée entre le dispositif mobile (150) et le véhicule (110) ;
- le stockage (340) d'une première information concernant l'au moins une clé de communication dans un dispositif à mémoire du dispositif mobile (150) ; et
- le stockage (350) d'une seconde information concernant l'au moins une clé de communication dans un dispositif à mémoire du véhicule (110) ; et
- l'établissement d'un premier canal de communication sécurisé entre le dispositif mobile (150) et l'au moins un contrôleur (120) du véhicule (110) en utilisant les première et seconde informations stockées concernant l'au moins une clé de communication.

10. Le procédé selon l'une des revendications 1 à 9, dans lequel le premier protocole de communication est un protocole de communication conforme au standard Bluetooth du Bluetooth Special Interest Group, en particulier le protocole de communication Bluetooth Low Energy, BLE.

11. Le procédé selon l'une des revendications 1 à 10, dans lequel le second protocole de communication est un protocole de communication conforme au standard IEEE 802.15.4, en particulier un protocole de communication ultra-large bande, UWB.

12. Le procédé selon l'une des revendications 1 à 11, comprenant en outre :

- la réalisation (250) d'une procédure de télémétrie sécurisée par cryptographie pour établir une distance entre le dispositif mobile (150) et l'au moins un émetteur-récepteur (132) du véhicule (110) en utilisant le second protocole de communication ; et
- l'accomplissement d'au moins une des fonctions suivantes sur la base de la distance établie :

    o le déverrouillage d'au moins une porte du véhicule (110) ;
    o le verrouillage de l'au moins une porte du véhicule (110) ;
    o le déverrouillage électronique d'au moins un élément de moteur ; et
    o le verrouillage électronique de l'au moins un élément de moteur.

13. Un véhicule (110), comprenant :

- au moins un premier émetteur-récepteur (134) configuré pour établir un premier canal de communication avec un dispositif mobile (150) en utilisant un premier protocole de communication ;

- au moins un second émetteur-récepteur (132) configuré pour établir un second canal de communication avec le dispositif mobile (150) en utilisant un second protocole de communication ;
- au moins un contrôleur (120) connecté au premier et au second émetteur-récepteur (132, 134), le contrôleur (120) étant configuré pour réaliser les étapes suivantes :

o l'obtention d'une information sur au moins un premier paramètre de configuration pris en charge par le dispositif mobile (150), sur la base d'au moins un message reçu par l'au moins un premier émetteur-récepteur (134) ;

o l'obtention d'une information sur une pluralité de paramètres de configuration supplémentaires pris en charge par l'au moins un second émetteur-récepteur (132) ; et

o l'instruction donnée à l'au moins un second émetteur-récepteur (132) d'établir le second canal de communication avec le dispositif mobile (150) en utilisant au moins la pluralité de paramètres de configuration pris en charge à la fois par le dispositif mobile (150) et l'au moins un second émetteur-récepteur (132), **caractérisé en ce que** :

la pluralité de paramètres de configuration comprend un paramètre de multiplicateur de session pour atteindre une durée de bloc de télémétrie, $K_F^k$, prise en charge, un ensemble de paramètres de durée de slot, $\{N_{Chap\_per\_Slot}\}_{SP}$ ou $\{N_{Chap\_per\_Slot}\}_{Car}$, prise en charge, représentant une liste de durées de slot respectivement prises en charge par le dispositif mobile et le véhicule, et un paramètre de durée de slot commune la plus courte, $N_{Chap\_per\_Slot}^k$.

**14.** Le véhicule selon la revendication 13, comprenant en outre au moins un parmi un élément de verrouillage de porte et un antidémarrage électronique (144), dans lequel le contrôleur (120) est en outre configuré pour réaliser les étapes suivantes :

- l'instruction donnée à l'au moins un second émetteur-récepteur (132) de réaliser une procédure de télémétrie sécurisée par cryptographie pour établir une distance entre le dispositif mobile (150) et l'au moins un second émetteur-récepteur (132) du véhicule (110) en utilisant le second protocole de communication ; et
- l'instruction donnée à au moins un parmi l'élément de verrouillage de porte et l'antidémarrage électronique (144) d'accomplir au moins une des fonctions suivantes sur la base de la distance établie :

o le déverrouillage d'au moins une porte du véhicule ;
o le verrouillage de l'au moins une porte du véhicule ;
o le déverrouillage électronique d'au moins un élément de moteur ; et
o le verrouillage électronique de l'au moins un élément de moteur.

**15.** Un code de programme pour une exécution par au moins un élément de traitement d'un dispositif mobile (150), qui, lorsqu'il est exécuté par l'au moins un élément de traitement, réalise les étapes suivantes :

l'établissement (220) d'un premier canal de communication (410, 510, 610) entre le dispositif mobile (150) et au moins un contrôleur (120) d'un véhicule (110) en utilisant un premier protocole de communication ;
la négociation (230) d'une pluralité de paramètres de configuration avec l'au moins un contrôleur (120) du véhicule (110) via le premier canal de communication (410, 510, 610) ; et
l'établissement (240) d'un second canal de communication (440, 540, 660) avec au moins une unité d'émetteur-récepteur (132) du véhicule (110) en utilisant un second protocole de communication sur la base de la pluralité négociée de paramètres de configuration, **caractérisé en ce que** :
la pluralité négociée de paramètres de configuration comprend un paramètre de multiplicateur de session pour atteindre une durée de bloc de télémétrie, $K_F^k$, prise en charge, un ensemble de paramètres de durée de slot, $\{N_{Chap\_per\_Slot}\}_{SP}$ ou $\{N_{Chap\_per\_Slot}\}_{Car}$, prise en charge, représentant une liste de durées de slot respectivement prises en charge par le dispositif mobile et le véhicule, et un paramètre de durée de slot commune la plus courte, $N_{Chap\_per\_Slot}^k$.

Fig. 1

Fig. 2

200

210 — Exchange keys for securing first
communication channel

220 — Establish a first (e.g. Bluetooth)
communication channel

230 — Negotiate at least one
configuration parameter using the
first communication channel

240 — Establish a second (e.g. UWB)
communication channel

250 — Perform ranging and/or application
specific function using the second
communication channel

Fig. 3

300

310  Install smart phone App

320  Download Digital Master Key

330  Generate BLE communication key

340  Store BLE communication key in App

350  Store BLE communication key in Controller

## Fig. 4

## Fig. 5

Fig. 6

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019067105 A1